# EUROPÄISCHE PATENTSCHRIFT

(11) **EP 0 498 207 B1**
(45) Veröffentlichungstag und Bekanntmachung des Hinweises auf die Patenterteilung: **26.10.1994**
(21) Anmeldenummer: 92100918.9
(22) Anmeldetag: 21.01.1992
(51) Int. Cl.: F04D 29/70, B01D 35/26

(54) **Filtereinsatz**
Filter cartridge
Cartouche filtrante

(30) Priorität: 08.02.1991 DE 4103844
(43) Veröffentlichungstag der Anmeldung: 12.08.1992
(73) Patentinhaber: KSB Aktiengesellschaft, 67227 Frankenthal (DE)
(72) Erfinder: Müller, Bernd, W-6520 Worms (DE)

(56) Entgegenhaltungen:
- GB-A- 114 366
- GB-A- 2 141 040
- US-A- 3 685 919

## Beschreibung

Die Erfindung betrifft eine Kreiselpumpe gemäß dem Oberbegriff des Hauptanspruches.

Aus der DE-B-26 39 854 ist eine derartige Pumpe bekannt, bei der einem ansaugenden Kreiselpumpenlaufrad ein Topf vorgeschaltet ist, innerhalb dessen sich ein Filtereinsatz befindet. Dieser ist korbförmig ausgebildet und hat die Aufgabe, im Fördermedium befindliche Verunreinigungen zurückzuhalten und von den Verunreinigungen befreites Wasser dem Pumpenlaufrad zuströmen zu lassen. Gewöhnlich sind derartige Filtereinsätze allseitig durchlässig ausgebildet, jedoch muß mit Hilfe einer periodischen Reinigung deren Verstopfung vorgebeugt werden. Etwas ähnliches zeigt die GB-C-500 072, bei der innerhalb einer dem Laufrad vorgeschalteten Saugkammer ein Filterrohr angeordnet ist und Verunreinigungen von dem Pumpenlaufrad fernhält.

Bei der üblichen Bauart gemäß der DE-B-26 39 854 ist es auch bekannt, den Filtereinsatz in das Pumpengehäuse zu integrieren. Diese Lösung hat jedoch den Nachteil, daß nach einer mitunter sehr kurzen Zeit eine Verstopfung entstehen kann. Denn innerhalb des Filtereinsatzes bildet sich eine bevorzugte Strömungsrichtung aus, wie sie in der DE-B-26 39 854 durch die Pfeile dargestellt ist. Aufgrund der vom Laufrad ausgeübten Sogwirkung wird zuerst derjenige Ort zugesetzt sein, der dem Pumpeneinlauf direkt gegenüberliegt.

Das nachströmende Fördermedium sucht sich dann einen anderen Weg durch den Filtereinsatz, um zum Laufrad zu gelangen. Dieser Weg ist aber länger und durch Gehäusekanten, Verengungen und dergleichen gestört, wodurch ein Druckverlust vor dem Laufrad entsteht. Als Folge dieser Störung der Zulaufverhältnisse entsteht im Laufrad Kavitation mit ihren bekannten nachteiligen Wirkungen. Im Laufe der Zeit können die im Fördermedium befindlichen Schwebeteilchen, wobei es sich um Blattreste, Zweige und dergleichen handeln kann, die verbleibenden Querschnitte des Filtereinsatzes zusetzen und eine Förderung völlig unterbinden.

Durch die GB-C- 21 41 040 ist eine Aquariumpumpe bekannt, mit deren Hilfe der Aquariuminhalt umgewälzt und gereinigt wird. Von der Konstruktion her ist diese Pumpe wie ein Topf aufgebaut. Den Bodenteil 10 bildet eine Antriebseinheit, in der ein Elektromotor mit senkrecht montierter Welle und einer Magnetkupplungshälfte angeordnet ist. Darauf montiert ist ein Filterbehälter 14, auf dessen Boden sich ein kleines Pumpengehäuse 32 befindet. An der Saugöffnung der Pumpe liegt eine zylindrische Filterpatrone mit einer Stirnseite an, während an der anderen Stirnseite ein den Filterbehälter verschließender Deckel anliegt. Des weiteren sind im Deckel die Saug- und Druckleitungen der Pumpe befestigt, wobei die Druckleitung durch den Filterbehälter hindurch zum Pumpengehäuse geführt ist. Die Filterpatrone kann nur aus radialer Richtung durchströmt werden. Nach Passieren der Filtermasse gelangt das Filtrat ins Innere der Patrone, von wo aus es der Pumpe axial zufließt. Die Filterfläche selbst bildet also lediglich eine Zylinderfläche. Im Fördermedium enthaltene großflächige Schwebstoffe, wie Blätter oder ähnliches, können diese Zylinderfläche in kürzester Zeit zusetzen. Das Fördermedium kann danach nicht mehr dem Pumpenlaufrad zuströmen.

Der Erfindung liegt die Aufgabe zugrunde, einen Filtereinsatz zu entwickeln, dessen Strömungswiderstand durch sich ansammelnde Fremdstoffe nur noch unwesentlich beeinflußt wird. Die Lösung dieser Aufgabe erfolgt gemäß dem kennzeichnenden Teil des Hauptanspruches.

Mit der erfindungsgemäßen Lösung wird einerseits die wirksame Filterfläche des korbförmigen Filtertopfes vergrößert und andererseits gewährleistet, daß sich mehrere Zuströmrichtungen zum Laufrad ausbilden können. Der der Saugöffnung gegenüberliegende Freiraum dient als Sammelraum für das Filtrat, aus dem heraus die Pumpe direkt ansaugt. Bei den bekannten Bauarten, bei denen die Wandfläche des Filtereinsatzes der Saugöffnung nahezu direkt gegenüberliegt, wirkt sich ein Zusetzen dieser Filterfläche sofort negativ auf das Saugverhalten der Pumpe aus. Das Fördermedium muß dann durch schmale, enge und verwinkelte Spalte der Saugöffnung zuströmen. Durch die erfindungsgemäße Ausbildung sammelt sich das Filtrat aus verschiedenen Richtungen innerhalb des Freiraumes und kann störungsfrei angesaugt werden.Das Zusetzen in Hauptströmungsrichtung, gewöhnlich dem kürzesten Weg, bedingt keinen Anstieg der Druckverluste, da die danebenliegenden Flächen des Filtereinsatzes einen ungehinderten Abfluß in den Freiraum gestatten. Die Betriebsdauer des Filtereinsatzes kann also um ein Vielfaches erhöht werden, da erst ein völliges Zusetzen der aktiven Wandflächen dessen Wirkung unterbindet.

Eine Ausgestaltung der Erfindung sieht hierzu vor, daß zwischen mindestens zwei Filterkammern des Filtereinsatzes ein Filtrat sammelnder Freiraum angeordnet ist. Dies können beispielsweise zwei mit ihren Bodenteilen einander zugekehrte und Zwischen den Bodenteilen einen Freiraum ausbildende Filtereinsätze sein. Es können aber auch zwei mit Abstand nebeneinander angeordnete, einen Freiraum zwischen sich bildende Filtereinsätze sein. Der Freiraum sollte in jedem Fall so groß dimensioniert sein, daß er mindestens dem Saugmundquerschnitt des Laufrades entspricht.

Nach einer anderen Ausgestaltung ist im Filtereinsatz, der korbförmig ausgebildet ist, ein den Filtereinsatz in Saugrichtung durchdringendes Filterrohr angeordnet. Das davon umhüllte Volumen bildet den Freiraum. Das Filterrohr kann dabei jede beliebige Querschnittsform aufweisen. Die Saugrichtung entspricht hierbei gewöhnlich auch der Drehachse des Laufrades. Ein von oben in den korbförmigen Filtereinsatz einströmendes Fördermedium kann als Filtrat allseits aus dem Filterkorb und durch das Siebrohr in den Freiraum einströmen. Hieraus saugt dann das Laufrad störungsfrei an. Versuche Zeigten, daß diese Lösungen einen problemlosen Pumpenbetrieb gewährleisten.

Nach einer weiteren Ausgestaltung können der Filtereinsatz und das Filterrohr mehrteilig und/oder zerlegbar ausgebildet sein. Dies erleichtert die Reinigung nach erheblich verlängerten Betriebszeiten.

Eine andere Ausgestaltung ist die in den Ansprüchen 5 und 6 beschriebene Freiraumbildung. Ein gewöhnlich einen runden Querschnitt aufweisender Filtereinsatz besitzt auf der der Saugöffnung oder dem Laufrad gegenüberliegenden Wandfläche eine Einbuchtung. Derart, daß sich in der Draufsicht ein halbmondförmiger Querschnitt ergibt. Anders ausgedrückt, der korbförmige Filtereinsatz weist eine konkave und eine konvexe Wandfläche auf, wobei die erstere der Saugöffnung zugekehrt ist. Dadurch bildet sich vor der Saugöffnung ein im Querschnitt elliptischer Freiraum aus, in den das Filtrat unter sehr geringen Strömungsverlusten einströmen kann.

Allen diesen Lösungen ist das Merkmal gemeinsam, daß die der Saugöffnung gegenüberliegende Filterfläche sehr stark vergrößert wurde, um somit bei einem Verstopfen des kürzesten Strömungsweges weitere gleichwertige und verlustarme Strömungswege zu erhalten.

Ausführungsbeispiele der Erfindung sind in den Zeichnungen dargestellt und werden im folgenden näher beschrieben. Am Beispiel einer Kreiselpumpe mit integriertem Filtertopf sind jeweils im Längsschnitt und einer Draufsicht mit Teilschnitt verschiedene Filtereinsätze dargestellt. Es zeigen die
- Fig. 1 und 2: Filtereinsätze mit gegenläufiger Zuströmung, die
- Fig. 3 und 4: parallel durchströmte Filtereinsätze mit gleicher Zuströmung, die
- Fig. 5 und 6: einen Filtereinsatz mit Siebrohr und die
- Fig. 7 und 8: einen im Querschnitt halbmondförmigen Filtereinsatz.

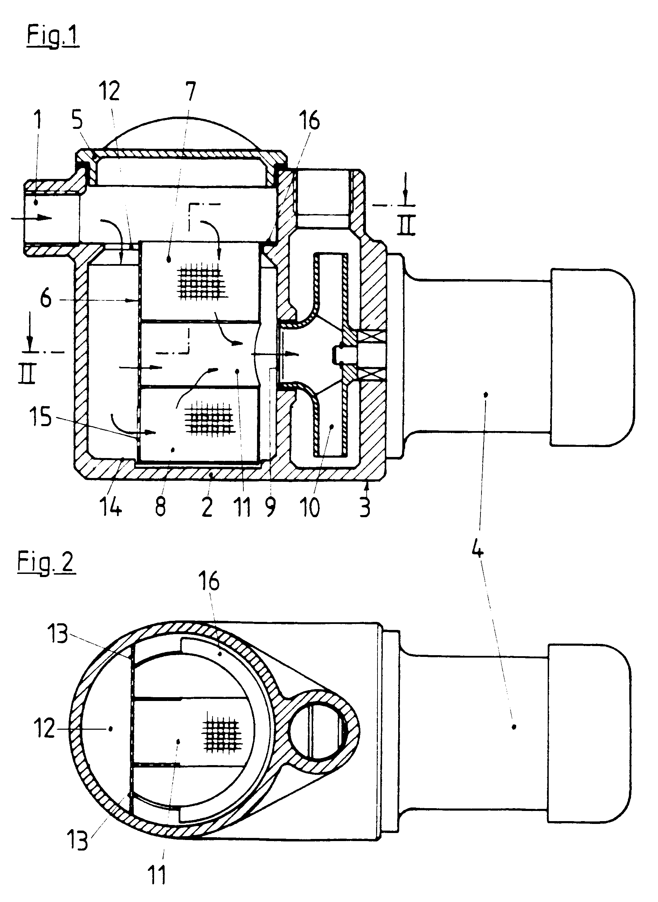

In der Fig. 1 strömt das zu fördernde Medium durch den Anschluß 1 einer Saugleitung in den Filtertopf 2 der Kreiselpumpe 3 ein. Die hier einstufig ausgebildete Kreiselpumpe wird von einem Motor 4 angetrieben. Der Filtertopf weist einen Verschlußdeckel 5 auf, nach dessen Entfernen ein Herausheben sowie eine Reinigung des korbförmigen Filtereinsatzes 6 möglich ist. Dieser Filtereinsatz weist zwei Filterräume 7, 8 auf. In den Filterraum 7 strömt das zu reinigende Medium von oben ein und das Filtrat strömt nach Passieren der hier gelochten Wandflächen in einen der Saugöffnung 9 des Laufrades 10 gegenüberliegenden Freiraum 11 ein. Wie der Fig. 2 zu entnehmen ist, die einem Schnitt II-II von Fig. 1 entspricht, kann verunreinigtes Medium durch eine Öffnung 12, die zwischen Filtertopf 2 und Filtereinsatz 6 besteht, zum Boden des Filtertopfes 2 strömen. Im Bodenbereich weist der mit einer Wandfläche 13 an der Seitenwand und am Boden 14 des Filtertopfes 2 dichtend anliegende Filtereinsatz 6 eine oder mehrere Durchströmöffnungen 15 auf. Durch diese kann das verunreinigte Medium in die hier untere Filterkammer 8 eintreten und das Filtrat dem Freiraum 11 und daraus dem Laufrad 10 zuströmen. Die eingezeichneten Pfeile stellen die Strömungsrichtung des Mediums sowie des Filtrats dar. Die eingezeichneten würfelförmigen Felder stellen gelochte Wandflächen des Filtereinsatzes dar. Zur optimalen Filterwirkung sind alle Wandflächen perforiert. Mit einem Bund 16 ist der Filtereinsatz 6 im Filtertopf 2 dichtend befestigt. Die Anpressung des Bundes 16 kann hierbei durch den Deckel 5, separate Hilfsmittel oder andere bekannte Lösungen erfolgen.

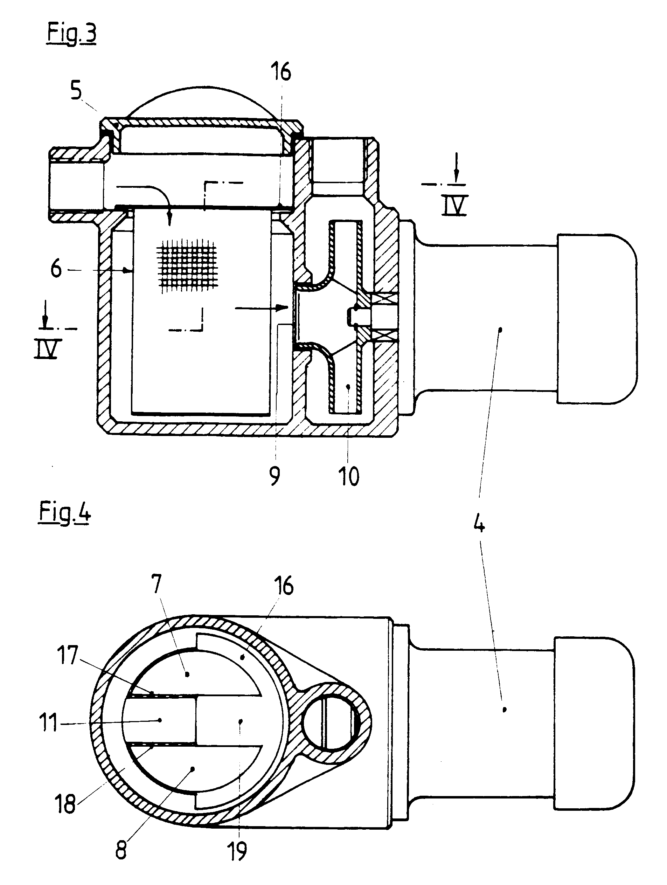

Die Fig. 3 und 4 unterscheiden sich von den Fig. 1 und 2 nur durch den anders gestalteten korbförmigen Filtereinsatz 6. Dieser besteht hier aus zwei nebeneinander angeordneten Filterkammern 7, 8, die beide von oben beaufschlagt werden. In ihrer Form entsprechen die Filterkammern in Achsrichtung erfolgenden Zylinderabschnitten. Zwischen den Filterkammern 7, 8 ist der von parallel verlaufenden Filterflächen 17, 18 begrenzte Freiraum 11 angeordnet. Verunreinigtes Medium kann durch die Filterflächen 17, 18 in den Freiraum 11 eintreten. Aus der Fig. 4, einem Schnitt gemäß den Linien IV-IV von Fig. 3, ist entnehmbar, wie eine Abdeckplatte 19 verhindert, daß von oben ein Zutritt in den Freiraum 11 erfolgt. Ein an den äußeren Umfangsflächen der Filterkammern 7, 8 austretendes Filtrat kann um den Filtereinsatz 6 herumströmen und in den Freiraum 11 oder die Saugöffnung 9 eintreten.

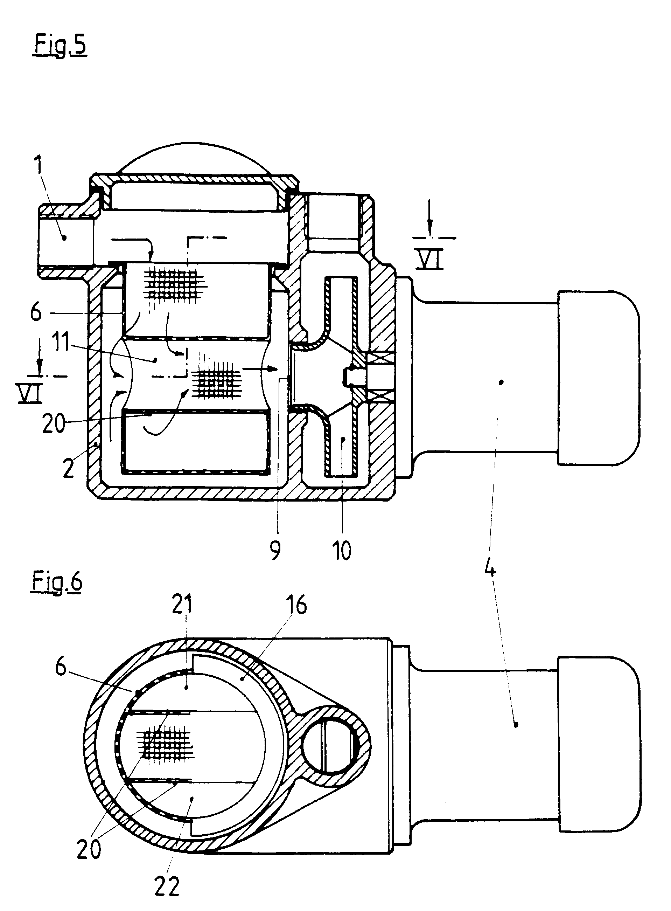

Die Fig. 5 zeigt einen korbförmigen Filtereinsatz 6, der von einem Filterrohr 20 durchdrungen ist. Der vom Filterrohr 20 umhüllte Raum bildet hierbei den Freiraum 11, welcher der Saugöffnung 9 vorangestellt ist und in Achsrichtung des Laufrades 10 verläuft. Das durch den Anschluß 1 in den Filtertopf 2 einströmende Medium gelangt von oben vollständig in den Filtereinsatz 6. Die Wandflächen des Filtereinsatzes sind, wie bei den vorstehend bereits beschriebenen Ausführungsformen, vollständig perforiert, um eine möglichst große Filterfläche zu erhalten. Davon ausgenommen sind Dichtflächen. Den Filtereinsatz 6 durchdringt ein in Achsrichtung der Pumpenwelle angeordnetes Filterrohr 20. Dies ist ebenfalls perforiert und weist einen Querschnitt auf, der kleiner als der Querschnitt des Filtereinsatzes 6 ist. Gemäß Fig. 6 kann das zu reinigende Medium seitlich durch die Zwischenräume 21, 22 um das Filterrohr 20 herumströmen und dies allseits durchströmen. Sollte sich auf dem kürzesten Wege zwischen Anschluß 1 und Saugöffnung 9 des Laufrades 10 eine Verstopfung bilden, dann ist so viel freie und benachbarte Filterfläche vorhanden, daß das Filtrat ohne Druckverlust in den Freiraum 11 und von dort dem Laufrad 10 zuströmen kann.

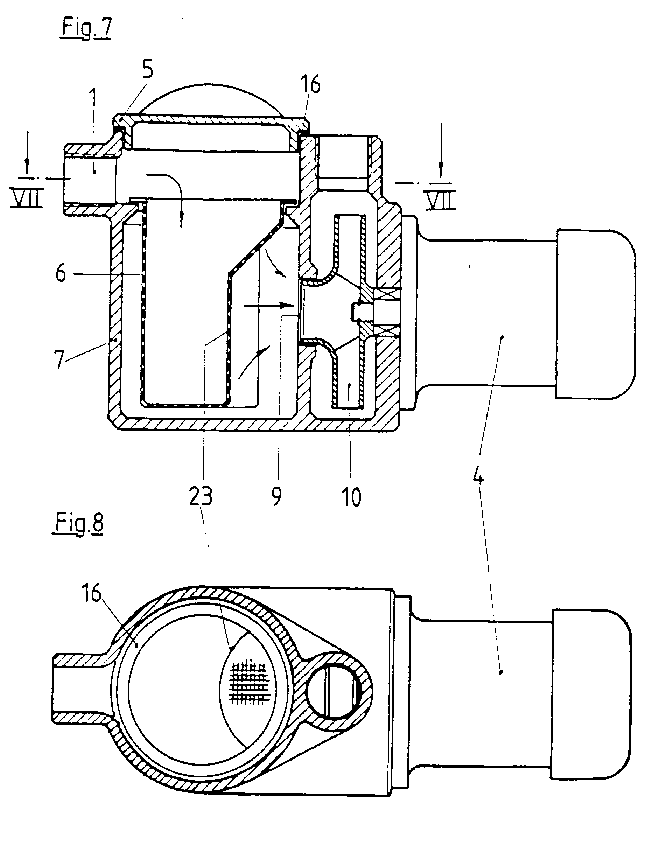

In den Fig. 7 und 8 ist ein korbförmiger Filtereinsatz 6 gezeigt, dessen der Saugöffnung 9 zugekehrte Seite eine nach innen weisende Wölbung 23 aufweist. Dadurch entsteht vor der Saugöffnung 9 ein Freiraum 11, in dem sich das gesamte Filtrat sammeln und aus dem das Laufrad 10 störungsfrei ansaugen kann. Eine Verstopfung der der Saugöffnung 9 gegenüberliegenden Filterfläche hat damit nicht mehr den bisher üblichen Druckverlust vor dem Laufrad zur Folge. Denn durch die vergrößerte Filterfläche vor der Saugöffnung kann genügend Filtrat durchfließen. Die Wartungsintervalle des Filtereinsatzes können durch die erfindungsgemäßen Ausgestaltungen um ein Vielfaches verlängert werden.

## Patentansprüche

1. Kreiselpumpe mit einem auf der Saugseite angeordneten Filtertopf (2) und einem innerhalb desselben angeordneten, herausnehmbaren korbförmigen Filtereinsatz (6), wobei beim Öffnen des Filtertopfes (2) mit der Kreiselpumpe verbundene Saug- und Druckleitungen in ihrer Position unverändert bleiben und das zu reinigende Fördermedium in das Innere des korbförmigen Filtereinsatzes (6) einströmt, **dadurch gekennzeichnet**, daß der korbförmige Filtereinsatz (6) mit einem Filtrat sammelnden Freiraum (11) versehen ist und der Freiraum (11) einer Saugöffnung (9) des Pumpenteiles (3) gegenüberliegt.

2. Kreiselpumpe nach Anspruch 1, dadurch gekennzeichnet, daß zwischen mindestens zwei Filterkammern des Filtereinsatzes (6) ein Filtrat sammelnder Freiraum (11) angeordnet ist.

3. Kreiselpumpe nach Anspruch 1, dadurch gekennzeichnet, daß ein einen Filtereinsatz (6) in Saugrichtung durchdringendes Filterrohr (20) mit dem von ihm umhüllten Volumen den Freiraum (11) bildet.

4. Kreiselpumpe nach den Ansprüchen 1 bis 3, dadurch gekennzeichnet, daß der Filtereinsatz (6) und das Filterrohr (20) mehrteilig und/oder zerlegbar ausgebildet sind.

5. Kreiselpumpe nach Anspruch 1, dadurch gekennzeichnet, daß die der Saugöffnung (9) des Pumpenteiles (3) zugekehrte Wandfläche (23) des Filtereinsatzes (6) mit der die Saugöffnung (9) enthaltenden Wandfläche des Filtertopfes (2) einen Filtrat sammelnden Freiraum (11) bildet.

6. Kreiselpumpe nach Anspruch 5, dadurch gekennzeichnet, daß der Freiraum (11) einen elliptischen oder ähnlich geformten Querschnitt aufweist.

## Claims

1. A centrifugal pump comprising a filter pot (2) arranged on the intake side and a removable basket-shaped filter insert (5) arranged inside the same, the intake and discharge lines, connected with the centrifugal pump, remaining unchanged in their positions during opening the filter pot (2) and the pumped fluid to be cleaned flowing into the interior of the basket-shaped filter insert (6), characterized in that the basket-shaped filter insert (6) is provided with a free space (11) collecting the filtrate and the free space (11) is opposite to an intake opening (9) in the pump part (3).

2. The centrifugal pump as claimed in claim 1, characterized in that between at least two filter chambers of the filter insert (6) a free space (11) is arranged collecting the filtrate.

3. The centrifugal pump as claimed in claim 1, characterized in that a filter tube (20) penetrating a filter insert (6) in the intake direction defines the free space (11) with the volume surrounded by the same.

4. The centrifugal pump as claimed in any one of the claims 1 through 3, characterized in that the filter insert (6) and the filter tube (20) are designed in several parts and/or so that they may be dismounted.

5. The centrifugal pump as claimed in claim 1, characterized in that with the wall surface of the filter pot (2) containing the intake opening (9) the wall surface (23) facing the intake opening (9) of the pump part (3), of the filter insert (6) constitutes a free space (11) collecting filtrate.

6. The centrifugal pump as claimed in claim 5, characterized in that the free space (11) has an elliptical or similarly shaped cross section.

## Revendications

1. Pompe circulaire avec un pot filtrant placé du côte de l'aspiration (2) et une cartouche filtrante (6) démontable, en forme de panier placée à l'intérieur du pot dans laquelle les conduites d'aspiration et de refoulement reliées à la pompe centrifuge restent dans leur position lorsqu'on ouvre le pot filtrant (2) et dans laquelle le liquide pompé à nettoyer pénètre à l'intérieur de la cartouche filtrante (6) en forme de panier caractérisée en ce que la cartouche filtrante (6) en forme de panier est munie d'une chambre libre (11) qui recueille le produit filtré et en ce que la chambre libre (11) est située à l'opposé d'une ouverture d'aspiration (9) de la pièce de la pompe (3).

2. Pompe circulaire selon la revendication 1 caractérisée en ce qu'une chambre libre (11) qui recueille le filtrat est placée entre au moins deux chambres filtrantes de la cartouche filtrante.

3. Pompe circulaire selon la revendication 1 caractérisée en ce qu'un tube filtrant (20) traversant la cartouche filtrante (6) dans le sens de l'aspiration forme la chambre libre (11) avec le volume qui l'entoure.

4. Pompe circulaire selon les revendications 1 à 3 caractérisée en ce que la cartouche filtrante (6) et le tube filtrant (20) sont formés de plusieurs pièces et/ou démontables.

5. Pompe circulaire selon la revendication 1 caractérisée en ce que la surface de la paroi (23) orientée vers l'ouverture d'aspiration (9) de la pièce de la pompe (3) forme avec la surface de la paroi du pot filtrant (2) contenant l'ouverture d'aspiration (9) une chambre libre (11) qui recueille le produit filtré.

6. Pompe circulaire selon la revendication 5 caractérisée en ce que la chambre libre (11) présente une section élliptique ou de forme semblable.
